(19) Europäisches Patentamt
European Patent Office
Office européen des brevets

(11) **EP 2 078 332 B1**

(12) **FASCICULE DE BREVET EUROPEEN**

(45) Date de publication et mention
de la délivrance du brevet:
**23.10.2013 Bulletin 2013/43**

(51) Int Cl.:
***H02K 1/22*** *(2006.01)*

(21) Numéro de dépôt: **07823731.0**

(86) Numéro de dépôt international:
**PCT/FR2007/051831**

(22) Date de dépôt: **20.08.2007**

(87) Numéro de publication internationale:
**WO 2008/043926 (17.04.2008 Gazette 2008/16)**

(54) **Rotor a griffes muni d'éléments ferromagnetiques interpolaires de largeur optimisée et machine tournante equipée d'un tel rotor**

Mit ferromagnetischen Interpolarelementen optimierter Breite ausgestatteter Zahnrotor und mit einem solchen Rotor ausgestattete Drehmaschine

Toothed rotor equipped with ferromagnetic interpolar elements of optimized width and rotary machine equipped with such a rotor

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **10.10.2006 FR 0654172**

(43) Date de publication de la demande:
**15.07.2009 Bulletin 2009/29**

(73) Titulaire: **VALEO EQUIPEMENTS ELECTRIQUES MOTEUR**
**94046 Créteil Cedex (FR)**

(72) Inventeurs:
• **GAS, Olivier**
**F-92400 Courbevoie (FR)**
• **TUNZINI, Marc**
**F-78000 Versailles (FR)**
• **RIGAUD, Stéphane**
**F-94410 Saint Maurice (FR)**

(56) Documents cités:
**EP-A- 0 772 279      EP-A- 0 881 752
EP-A- 1 089 417      EP-A- 1 134 877
EP-A1- 0 991 163     FR-A- 2 865 322
US-A- 4 201 930**

**Description**

L'invention concerne une machine électrique tournante comportant deux roues polaires à griffes.

L'invention concerne plus particulièrement une machine électrique tournante, notamment pour véhicule automobile, qui comporte un rotor et un stator, le rotor comportant :

- un arbre monté rotatif autour d'un axe de rotation axial ;
- une roue polaire avant et une roue polaire arrière qui ont un même diamètre extérieur compris entre 90 et 120 mm, et qui sont montées centrées sur l'arbre, chaque roue polaire comportant un plateau radial circulaire ;
- des griffes qui s'étendent axialement en direction de l'autre roue polaire depuis une base agencée à la périphérie du plateau de chaque roue polaire jusqu'à une extrémité libre, chaque griffe d'une roue polaire étant imbriquée tangentiellement entre deux griffes périphériques axiales adjacentes de l'autre roue polaire, chaque griffe étant délimitée tangentiellement par deux face latérales, et chaque griffe ayant une forme trapézoïdale qui converge depuis la base vers l'extrémité libre, et les faces latérales de chaque griffe formant un même angle de griffe par rapport à la direction axiale ;
- un espace tangentiel interpolaire qui est réservé entre les faces latérales parallèles en vis-à-vis de deux griffes consécutives de chaque roue polaire ;
- au moins un élément ferromagnétique qui est agencé dans au moins un espace interpolaire et qui présente une largeur active définie de manière orthogonale aux faces latérales des griffes adjacentes ; et
- le stator comportant un corps annulaire coaxial au rotor comportant des encoches axiales réparties régulièrement le long du corps annulaire avec un pas dentaire prédéterminé, et comportant un bobinage de stator polyphasé comportant une pluralité d'enroulements de phase qui sont agencés dans des séries d'encoches associées.

On connaît déjà des rotors de machine électrique tournante de ce type. Lors de l'utilisation d'une machine électrique tournante équipée d'un tel rotor, les griffes de chaque roue polaire forment des pôles magnétiques, par exemple nord pour la première roue polaire, et sud pour la deuxième roue polaire. Le flux magnétique qui circule des pôles d'une roue aux pôles de l'autre roue polaire, passe par des boucles formées par un bobinage de stator qui entoure le rotor.

Une telle machine électrique tournante est par exemple un alternateur qui est utilisé pour produire du courant électrique dans le bobinage du stator lorsque le rotor est entraîné mécaniquement en rotation.

Pour empêcher le flux magnétique émis par ces pôles de court-circuiter les boucles du bobinage de stator, il est connu d'interposer des aimants permanents formés par des éléments ferromagnétiques entre deux pôles opposés consécutifs du rotor. FR2865322 décrit un alternateur pour véhicule automobile comprenant un rotor dans lequel la forme projetée des aimants permanents est contenue dans le plan de projection formé par le chevauchement des pôles magnétiques adjacents en forme de griffe, en regardant les pôles magnétiques en forme de griffe dans le sens de rotation du rotor, et est globalement semblable à la forme du plan de projection.

US4201930 traite d'un alternateur polyphasé pour véhicule automobile équipé d'un rotor de type Lundell dans lequel une bobine d'excitation est logée entre une pluralité de paires de pôles magnétiques en forme de griffe. Les griffes du rotor sont modifiées afin de leur donner une forme trapézoïdale asymétrique, avec le côté de pointe du trapèze qui est décalé par rapport au côté de base de celui-ci et cela dans le sens de rotation du rotor. Cette configuration asymétrique modifie la forme d'onde du flux magnétique circulant à travers le rotor et le stator et apporte une réduction en charge du bruit magnétique généré dans l'alternateur.

EP0881752 décrit un alterateur selon le préambule de la revendication 1.

La présente invention vise à améliorer le rendement d'une machine électrique tournante telle que décrite précédemment.

Conformément à l'invention, la machine a un pas dentaire qui est inférieur à la longueur de la face latérale de chaque griffe en projection axiale, de manière à minimiser le bruit, et la largeur active de l'élément ferromagnétique est comprise entre 5 mm et 6 mm.

Selon d'autres caractéristiques de l'invention :

- l'élément ferromagnétique comporte au moins deux pièces de matériau ferromagnétique qui sont empilées tangentiellement dans l'espace interpolaire, la largeur active de l'élément ferromagnétique étant égale à la somme des largeurs actives des pièces de matériau ferromagnétique ;
- chaque roue polaire comporte six griffes ;
- chaque roue polaire comporte huit griffes.
- le bobinage de stator comporte au moins six enroulements de phase ;
- le stator comporte trente-six encoches ;
- le stator comporte soixante-douze encoches ;
- le stator comporte quarante-huit encoches.

D'autres avantages et caractéristiques apparaîtront au cours de la lecture de la description détaillée qui va suivre pour la compréhension de laquelle on se reportera aux dessins annexés parmi lesquels :

- la figure 1 est une vue en coupe axiale d'un alternateur muni d'un rotor ;
- la figure 2 est une vue axiale qui représente le corps de stator de l'alternateur de la figure 1 ;
- la figure 3 est une représentation schématique en perspective des roues polaires du rotor représenté à la figure 1, qui comporte des éléments ferromagnétiques montés entre les griffes axiales conformément à l'invention ;

- la figure 4 est une vue partielle de dessus qui représente deux griffes appartenant respectivement à la première roue polaire et à la deuxième roue polaire ;

- la figure 5 est une vue similaire à celle de la figure 4 avec arrachement partiel qui représente les roues polaires équipées d'un élément ferromagnétique qui est agencé dans l'espace interpolaire ;

- la figure 6 est une vue en section selon la ligne 6-6 des dents représentées à la figure 5 ;

- la figure 7 est une courbe qui représente l'efficacité de l'intensité de courant électrique induit dans le stator lorsque le rotor tourne à 1800 tours par minute en fonction de la largeur active de l'élément ferromagnétique ;

- la figure 8 est une vue partielle en développé qui représente une griffe d'une roue polaire qui est agencée au droit des encoches du stator ;

- la figure 9 est une vue similaire à celle de la figure 6 qui représente une variante de l'invention.

Dans la suite de la description, des éléments analogues, similaires ou identiques seront désignés par des mêmes numéros de référence.

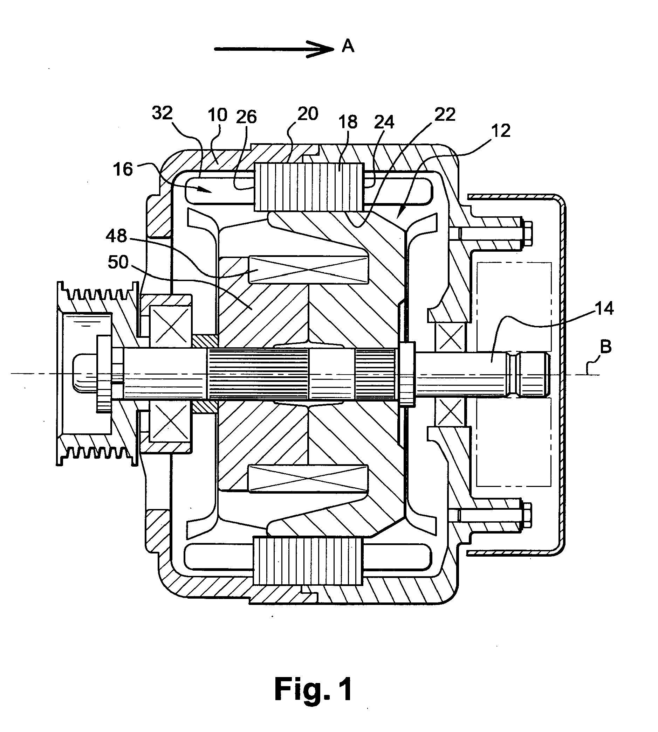

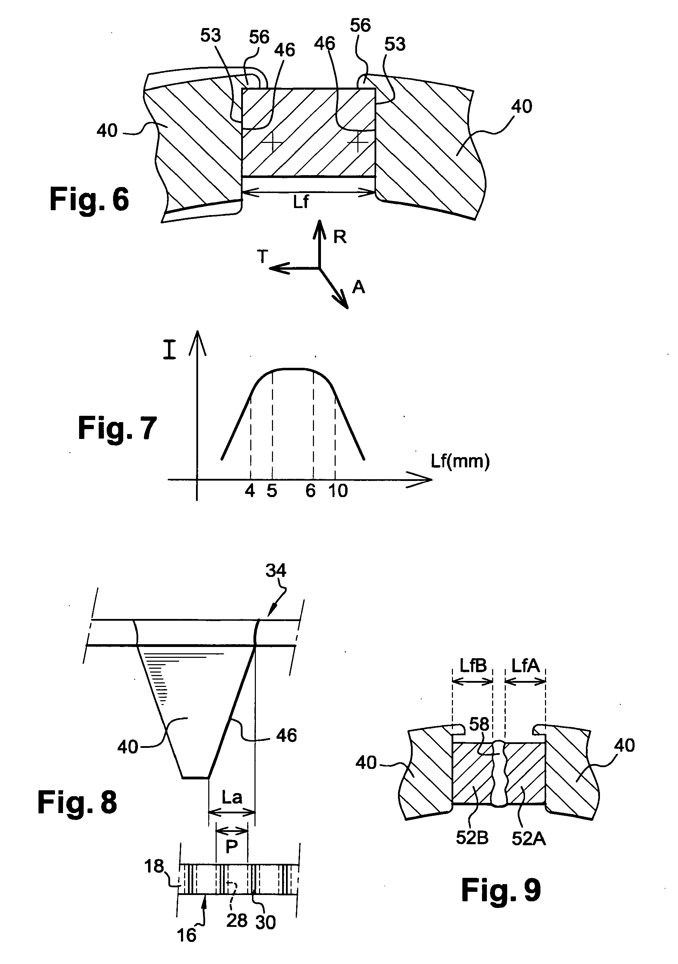

Dans la suite de la description on adoptera une orientation axiale indiquée par la flèche "A" des figures 1 et 6 qui est dirigée d'arrière en avant, une orientation radiale qui s'étend perpendiculairement à l'axe d'orientation axiale du rotor et qui est indiqué par la flèche "R" de la figure 6 qui est dirigée de bas en haut, et une orientation tangentielle qui est orthogonal aux orientations axiale "A" et radial "R" et qui est indiquée par la flèche "T" de la figure 6.

Par ailleurs, des faces radiales orientées vers le milieu du rotor seront qualifiées de faces internes tandis que les faces orientées dans un sens opposé seront qualifiées de faces externes. De même, des faces axiales orientées vers l'axe de rotation de l'arbre seront qualifiées de faces intérieures tandis que des faces axiales orientées dans un sens opposé seront qualifiées de faces extérieures.

En se reportant à la figure 1, on a représenté une machine électrique tournante, dans le cas présent un alternateur du type polyphasé pour véhicule automobile à moteur thermique. Bien entendu l'alternateur peut aussi être réversible et consister en un alterno-démarreur notamment pour démarrer le moteur thermique du véhicule.

Lorsque la machine fonctionne en mode alternateur elle transforme de l'énergie mécanique en énergie électrique comme tout alternateur.

Lorsque la machine fonctionne en mode moteur électrique, notamment en mode démarreur pour démarrer le moteur thermique du véhicule, elle transforme de l'énergie électrique en énergie mécanique.

Cette machine comporte essentiellement un carter 10 et, à l'intérieur de celui-ci, un rotor 12 qui comporte un arbre central 14. L'arbre central 14 est monté à rotation par rapport au carter 10 autour de son axe d'orientation axiale "B". Le carter 10 renferme aussi un stator 16 qui entoure le rotor 12.

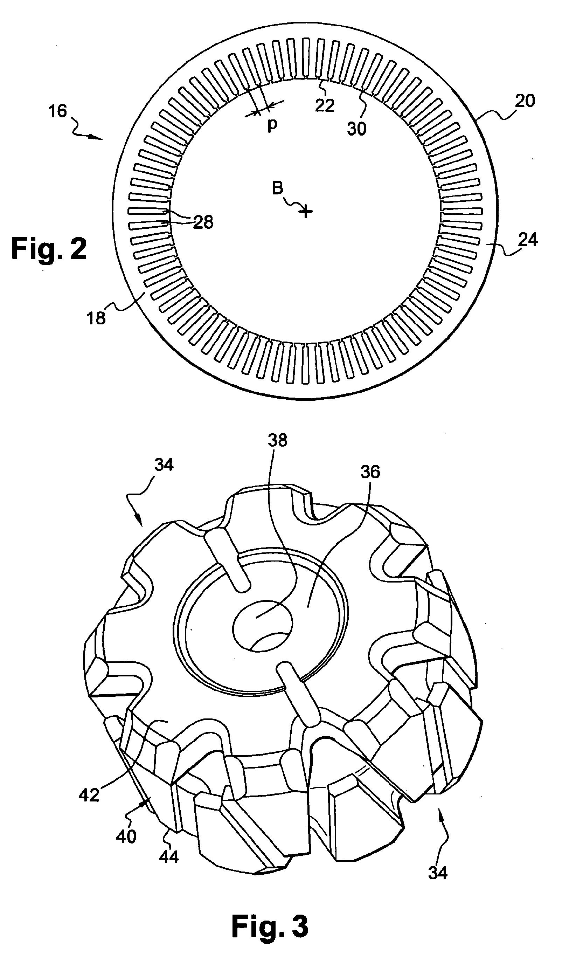

Comme représenté à la figure 2, le stator 16 comporte un corps annulaire cylindrique 18 coaxial avec le rotor 12. Le stator est formé d'un paquet de tôles empilées axialement. Le corps annulaire 18 est délimité radialement par une face cylindrique extérieure 20 et par une face cylindrique intérieure 22, et il est délimité axialement par une face annulaire radiale avant 24 et par une face annulaire radiale arrière 26.

Le corps annulaire 18 comporte une pluralité d'encoches 28 qui s'étendent axialement de manière débouchante dans chacune des faces radiales avant 24 et arrière 26. Le corps annulaire 18 est ici du type semi-fermé, c'est-à-dire que chaque encoche 28 débouche aussi radialement dans la face cylindrique intérieure 22 par l'intermédiaire d'une fente axiale 30 pour permettre le montage d'un bobinage de stator 32 formant de part et d'autre du corps annulaire 16 des chignons.

Les encoches 28 sont réparties régulièrement tout autour du corps annulaire 18 avec un pas dentaire tangentiel "p" prédéterminé entre deux encoches 28 adjacentes. Le pas dentaire "p" est plus particulièrement défini ici par la distance au niveau de la face cylindrique intérieure 22 entre le plan médian axial radial d'une première encoche 28 et le plan médian axial radial d'une deuxième encoche 28 adjacente.

Ce bobinage de stator 32 est par exemple un bobinage hexaphasé qui comporte alors un jeu de six enroulements de phase. Les sorties du bobinage de stator 32 sont reliées à un pont redresseur (non représenté) comportant des éléments redresseurs tels que des diodes ou des transistors du type MOSFET, notamment lorsque la machine est du type réversible et consiste en un alterno-démarreur comme décrit par exemple dans le document FR-A-2.725.445 (US-A-6.002.219) .

Chaque enroulement de phase est obtenu à l'aide d'un fil continu, électriquement conducteur, revêtu d'une couche isolante et monté dans des séries d'encoches 28 associées du corps annulaire 18 du stator 16. Dans le mode de réalisation représenté aux figures, le bobinage de stator 32 comportant six enroulements de phase, le fil conducteur d'un enroulement de phase est inséré toutes les six encoches 28.

Selon une cariante, pour réduire le taux d'ondulation et les bruits magnétiques, le bobinage de stator 32 comporte deux jeux d'enroulements triphasés pour former un dispositif d'enroulements composites de stator, les enroulements étant décalés de trente degrés électriques comme décrit par exemple dans les documents US-A1-2002/0175589, EP-0.454.039 et FR-A-2.784.248. Dans ce cas il est prévu deux ponts redresseurs et toutes les combinaisons d'enroulements triphasés en étoile et/ou en triangle sont possibles.

Il est à noter que dans l'exemple de réalisation décrit, comme on le verra par la suite le rotor 12 comporte huit paires de pôles. Il est donc prévu quarante-huit encoches 28 dans le corps du stator 16 dans le cas dans lequel il est prévu deux jeux d'enroulements triphasés comme décrit dans le document FR-A-2.737.063 précité, ou quatre-vingt-seize encoches 28 dans les solutions décrites dans les documents US-A1-2002/0175589 et EP-A1-0.454.039 précités.

Bien entendu le rotor 12 peut, selon les applications, comporter un nombre différent de paires de pôles.

Selon une variante non représentée, pour un meilleur remplissage des encoches 28 du corps 18 du stator 16, les enroulements sont réalisés à l'aide de conducteurs en forme de barres, tel que des épingles, reliées entre elles par exemple par soudage.

D'une manière générale l'alternateur est du type polyphasé comportant de préférence plus de trois enroulements de phase comme cela sera expliqué plus loin dans la description. Le ou les ponts redresseurs permettent notamment de redresser le courant alternatif produit dans les enroulements du stator 16 en un courant continu notamment pour charger la batterie (non représentée) du véhicule automobile et alimenter les charges et les consommateurs électriques du réseau de bord du véhicule automobile.

Le rotor 12 est un rotor à griffes, comme décrit par exemple dans les documents US-A1-2002/0175589 et EP-A1-0.454.039, comprenant une première roue polaire avant 34 et une deuxième roue polaire arrière 34 qui sont axialement juxtaposées. Chaque roue polaire 34 comporte un plateau radial 36 de forme globalement circulaire pourvu d'un orifice central 38 de passage de l'arbre de rotation 14. Chaque roue polaire 34 est liée en rotation avec l'arbre de rotation 14.

Comme représenté à la figure 3, chaque roue polaire 34 comporte aussi des griffes 40 qui s'étendent axialement depuis une base 42 qui est agencée à la périphérie extérieure du plateau 36 jusqu'à une extrémité libre 44 vers l'intérieur en direction de l'autre roue polaire 34. Chaque roue polaire 34 comporte ici huit griffes 40.

Selon une variante non représentée, chaque roue polaire 34 comporte six griffes 40.

Les griffes 40 sont réparties régulièrement sur le pourtour du plateau 36 de la roue polaire 34. Toutes les griffes 40 sont ici identiques.

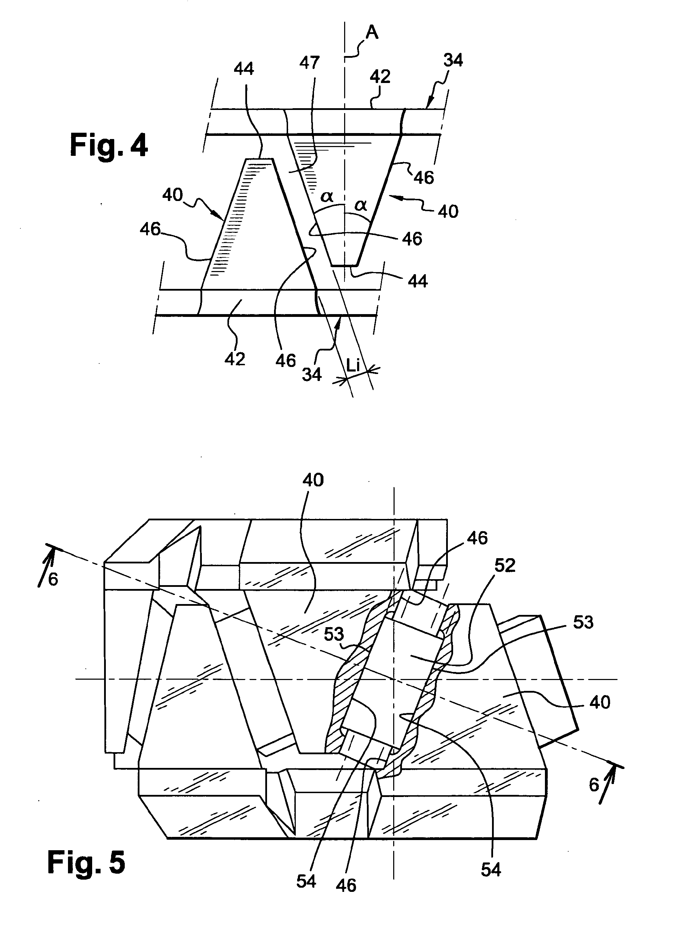

Comme illustré à la figure 4, chaque griffe 40 a une forme trapézoïdale convergeant depuis la base 42 jusqu'à l'extrémité libre 44. Chaque griffe 40 est délimitée tangentiellement par deux faces latérales radiales 46. Plus particulièrement, chaque griffe 40 forme ici un triangle isocèle tronqué dont le sommet forme l'extrémité libre 44 de la griffe 40 et dont la base est formée par la base 42 de la griffe 40. Chaque face latérale forme ainsi un même angle "$\alpha$" par rapport à la direction axiale "A". Par la suite, cet angle "$\alpha$" sera appelé "angle de griffe".

Chaque griffe 40 d'une roue polaire 34 est imbriquée entre deux griffes 40 consécutives de l'autre roue polaire 34 de manière que chaque face latérale 46 des griffes 40 de la première roue polaire 34 soit agencée en vis-à-vis d'une face latérale 46 d'une griffe 40 de la deuxième roue polaire 34 et réciproquement. Les griffes 40 des deux roues polaires étant identiques, les faces latérales 46 en vis-à-vis sont sensiblement parallèles.

Les griffes 40 de la première roue polaire avant 34 sont destinées à former des pôles magnétiques d'un premier signe, par exemple nord, tandis que les griffes 40 de la deuxième roue polaire arrière 34 sont destinées à former des pôles magnétique d'un deuxième signe, par exemple sud. Ainsi les griffes 40 imbriquées forment une alternance de pôle nord et de pôle sud.

Les roues polaires 34 ne sont pas en contact l'une avec l'autre. A cette fin, un espace tangentiel interpolaire 47 est réservé entre les griffes 40 de la première roue polaire avant 34 et de la deuxième roue polaire arrière 34. Ainsi, deux faces latérales 46 associées en vis-à-vis sont espacées l'une de l'autre d'une largeur "Li" et elles délimitent l'espace interpolaire 47.

Dans la suite de la description et dans les revendications, le "largeur" sera déterminée selon une direction orthogonale aux faces latérales 46 en vis-à-vis qui délimite l'espace interpolaire 47 en question.

En se reportant à la figure 1, un bobinage d'excitation 48 est implanté axialement entre les plateaux 36 des roues polaires 34. Il est porté par une partie de rotor 12 en forme d'un noyau annulaire cylindrique 50 coaxial à l'arbre 14, qui comporte un alésage central. De manière non limitative, le noyau 50 est ici constitué de deux tronçons axialement distincts dont chacun est réalisé venu de matière avec une roue polaire 34 associée.

De manière connue, des éléments ferromagnétique 52, tels que des aimants permanents, sont agencés dans au moins un espace interpolaire 47 du rotor 12. Dans l'exemple représenté aux figures, le rotor 12 comporte seize éléments ferromagnétiques 52 dont chacun est agencé dans un espace interpolaire 47 associé du rotor 12, c'est-à-dire que la totalité des espaces interpolaires sont munis d'un éléments ferromagnétique 52.

Selon une variante non représentée de l'invention, seulement une partie des espaces interpolaires est équipée d'élément ferromagnétique 52.

Comme représenté aux figures 5 et 6, chaque élément ferromagnétique 52 est ici formé par une unique barre parallélépipédique d'axe parallèle aux faces latérales associées 46 de l'espace interpolaire 47 qui est entièrement constituée d'un matériau ferromagnétique. Tous les éléments ferromagnétiques sont ici de forme et de dimensions identiques.

L'élément ferromagnétique 52 est plus particulièrement délimité tangentiellement par deux faces radiales polaires 53 nord et sud qui sont agencées en vis-à-vis de chacune des faces latérales 46 de l'espace interpolaire 47. Plus précisément, la face polaire 53 nord est agencée en vis-à-vis de la face latérale 46 de la griffe 40 de la roue polaire 34 nord et la face polaire 53 sud est agencée en vis-à-vis de la face latérale 46 de la griffe 40 de la roue polaire sud.

De manière connue, les éléments ferromagnétiques 52 sont agencés dans des gorges 54 sensiblement axiales qui sont formées dans les faces latérales 46 qui délimite l'espace interpolaire 47.

Le bord extérieur de chaque face latérale 46 comporte plus particulièrement un rebord 56 qui s'étend tangentiellement vers l'intérieur de l'espace interpolaire 47 de manière à retenir radialement l'élément ferromagnétique 52 à l'encontre de la force centrifuge lorsque le rotor 12 est en rotation rapide.

Lors de l'utilisation de l'alternateur, le bobinage d'excitation 48 du rotor 12 est alimenté en électricité de manière qu'un champ magnétique d'axe axial "B" soit induit. Ce champ magnétique de rotor est canalisé par les roues polaires 34 de manière à ressortir par les griffes 40.

Les éléments ferromagnétiques 52 agencés dans les espaces interpolaires sont orientés de manière à empêcher le flux magnétique de "sauter" directement d'une roue polaire 34 à l'autre en passant par l'espace interpolaire 47. Ainsi, le flux magnétique est déformé de manière à être redirigé vers les boucles du bobinage 32 de stator 16.

Le rotor 12 est alors entraîné en rotation autour de son axe "B" et, selon un phénomène physique bien connu, le passage de chaque griffe 40 radialement au droit de chaque boucle des enroulements de phase du bobinage 32 de stator 16 induit un courant électrique dans le bobinage 32 de stator 16.

Selon les enseignements de l'invention, la largeur active "Lf" de chaque élément ferromagnétique 52 est choisie dans un intervalle de valeur compris entre 4mm et 10mm pour un rotor 12 dont le diamètre extérieur est compris entre 90mm et 120mm. On a en effet constaté que, de manière surprenante, en agençant dans certains ou tous les espaces interpolaires 47 des éléments ferromagnétiques 52 dont la largeur active est comprise dans cet intervalle de largeurs actives "Lf", l'intensité du courant électrique induit dans le bobinage 32 de stator 16 est optimale.

Ainsi, comme représenté à la figure 7, on a constaté par des mesures que, lorsque le rotor 12 tourne à une vitesse de 1800 tours par minute, l'intensité de courant électrique induit dans le bobinage 32 de stator 16 présente un pic lorsque la largeur active "Lf" des éléments ferromagnétiques 52 est comprise dans l'intervalle de valeurs compris entre 4mm et 10mm.

Avantageusement, l'optimum du rendement est atteint lorsque la largeur active "Lf" de l'élément ferromagnétique 52 est choisi dans intervalle compris entre 5mm et 6mm.

Selon un autre aspect de l'invention, la largeur "Li" de l'espace interpolaire 47 soit adaptée à la largeur active "Lf" de l'élément ferromagnétique 52, c'est-à-dire que la largeur "Li" de l'espace interpolaire 47 doit être sensiblement égale à la largeur "Lf" de l'élément ferromagnétique 52.

Dans les faits, la largeur "Li" de l'espace interpolaire 47 est toujours légèrement supérieure à celle de l'élément ferromagnétique 52 afin que l'élément ferromagnétique 52 ne subisse pas de contraintes de compression entre les deux griffes 40, mais il faut que les faces polaires 53 soit très proches, et idéalement au contact, des faces latérales 46 pour que son efficacité soit maximale.

A cette fin, la largeur "Li" de l'espace interpolaire 47 du rotor 12 doit être adaptée par rapport aux rotors déjà connus.

Il n'est pas possible d'augmenter la longueur tangentielle de la base 42 des griffes 40 car cette dimension est imposée par des contraintes de conception. L'adaptation de la largeur "Li" de l'espace interpolaire 47 est donc réalisée en diminuant l'angle de griffe "α" formé entre les faces latérales 46 et la direction axiale "A". L'angle de griffe "α" est généralement compris entre 10° et 25°.

Cependant, cette adaptation est susceptible d'avoir des effets sur le bruit produit par l'alternateur lors de son utilisation.

En effet, lors de son utilisation, le puissant champ magnétique qui circule entre le rotor 12 et le stator 16 produit une charge radiale cyclique sur les griffes 40. Les griffes 40 fléchissent donc élastiquement vers l'extérieur à chaque passage au droit d'une encoche 28 du stator 16 qui correspond à la fin d'une boucle et au début de la boucle suivante. Ainsi, lorsque le rotor 12 tourne à très haute fréquence, par exemple aux alentours de 1800 tours par minute, les griffes 40 vibrent, produisant un sifflement désagréable appelé couramment "bruit magnétique".

Pour éviter que ce bruit magnétique ne soit trop intense, il faut que la longueur "La" tangentielle en projection axiale de chaque face latérale 46 soit supérieure au pas dentaire "p" des encoches 28 du stator 16 afin que les faces latérales 46 des griffes 40 ne soient pas soumises brutalement et simultanément sur toutes leur longueur au changement de boucle, comme cela est représenté à la figure 7. La longueur tangentielle en projection axiale "La" de chaque face latérale 46 est obtenue en multipliant la longueur de la face latérales par le sinus de l'angle de griffe "α".

De manière générale, il est préférable, pour diminuer le bruit magnétique, que l'angle de griffe "α" satisfasse à l'inégalité suivante :

$$\alpha \geq Arc\tan\left(\frac{\phi_{stator} \times \pi}{N \times PP \times \varphi \times Hp}\right)$$

dans laquelle :

-    $\phi_{stator}$ est le diamètre intérieur du stator 16 qui est

sensiblement égalau diamètre extérieur des roues polaires 34 ;

- N est le nombre d'encoches 28 par pôle et par phase ;
- $\varphi$ est le nombre d'enroulements de phase ;
- Hp est la longueur axiale d'une griffe 40.

**[0059]** L'invention propose donc que le stator 16 soit équipé d'un grand nombre d'encoches 28, par exemple trente-six, quarante-huit ou plus, afin que le pas dentaire "p" soit diminué pour être adapté au nouvel angle de griffe "$\alpha$", c'est-à-dire que le pas dentaire "p" est inférieur à la longueur en projection axiale "La" des faces latérales 46.

**[0060]** De manière générale le nombre d'encoches 28 est un multiple du produit du nombre de phase du bobinage de stator 32 par le nombre de griffes 40 d'une roue polaire 34.

**[0061]** Avantageusement, un tel stator 16 est adapté pour recevoir un bobinage de stator 32 comportant plus de trois phases, par exemple un bobinage hexaphasé ou double triphasé. Cependant, l'invention n'est pas limité à un tel nombre de phases, et tout autre nombre de phases qui permet d'obtenir un pas dentaire "p" inférieur à la longueur en projection axiale "La" de chaque face latérale 46 entre aussi dans le champs d'application de la présente invention.

**[0062]** Selon un deuxième mode de réalisation représenté à la figure 9, l'élément ferromagnétique 52 est formé d'au moins deux pièces 52A, 52B disjointes réalisée chacune en matériau ferromagnétique qui sont empilées tangentiellement dans l'espace interpolaire 47. Un tel mode de réalisation est par exemple décrit dans le document FR- A- 2.784.248, aux pages 6 et 7.

**[0063]** Les deux pièces 52A, 52B sont ici des parallélépipèdes d'axe parallèle aux faces latérales 46. Ces deux pièces 52A, 52B sont ici fixées l'une à l'autre avec interposition d'une couche radiale et souple de colle. Chaque pièce 52A, 52B présente une largeur active référencée respectivement "LfA" et "LfB".

**[0064]** Selon les enseignements de l'invention, la largeur active de l'élément ferromagnétique 52 est égale à la sommes des largeurs actives "LfA+LfB" de ces deux pièces ferromagnétiques 52A, 52B, à l'exclusion de la largeur de la couche de colle, est comprise dans l'intervalle optimal défini précédemment.

**[0065]** De manière générale, on comprendra que la largeur active "Lf" de l'élément ferromagnétique 52 est égale à la sommes des largeurs "LfA + LfB" de toutes les pièces ferromagnétiques 52A, 52B qui sont empilées tangentiellement entre les deux faces latérales 46 d'un espace interpolaire 47, sans prendre en considération d'éventuelles couches de matériau amagnétique interposées.

## Revendications

**1.** Machine électrique tournante comportant un rotor (12) et un stator (16) :

ledit rotor (12) comportant :

- un arbre (14) monté rotatif autour d'un axe de rotation axial (B) ;
- une roue polaire avant (34) et une roue polaire arrière (34) qui ont un même diamètre extérieur compris entre 90 et 120 mm, et qui sont montées centrées sur l'arbre (14), chaque roue polaire (34) comportant un plateau radial circulaire (36) ;
- des griffes (40) qui s'étendent axialement en direction de l'autre roue polaire (34) depuis une base (42) agencée à la périphérie du plateau (36) de chaque roue polaire (34) jusqu'à une extrémité libre (42), chaque griffe (40) d'une roue polaire (34) étant imbriquée tangentiellement entre deux griffes périphériques axiales adjacentes (40) de l'autre roue polaire (34), chaque griffe (40) étant délimitée tangentiellement par deux face latérales (46), et chaque griffe (40) ayant une forme trapézoïdale qui converge depuis la base (42) vers l'extrémité libre (44), et les faces latérales (46) de chaque griffe (40) formant un même angle de griffe ($\alpha$) par rapport à la direction axiale (A);
- un espace tangentiel interpolaire (47) qui est réservé entre les faces latérales (46) parallèles en vis-à-vis de deux griffes (40) consécutives de chaque roue polaire (34) ;
- au moins un élément ferromagnétique (52, 52A, 52B) qui est agencé dans au moins un espace interpolaire (47) et qui présente une largeur active (Lf) définie de manière orthogonale aux faces latérales (46) des griffes adjacentes (40) ; et

ledit stator (16) comportant un corps annulaire (18) coaxial au rotor (12) comportant des encoches (28) axiales réparties régulièrement le long du corps annulaire (18) avec un pas dentaire (p) prédéterminé, et comportant un bobinage de stator (32) polyphasé comportant une pluralité d'enroulements de phase qui sont agencés dans des séries d'encoches (28) associées ;
**caractérisée en ce que** le pas dentaire (p) est inférieur à la longueur (La) de la face latérale (46) de chaque griffe (40) en projection axiale de manière à minimiser le bruit magnétique, et la largeur active (Lf) de l'élément ferromagnétique est comprise entre 5 mm et 6 mm.

**2.** Machine électrique tournante selon la revendication

précédente, **caractérisée en ce que** l'élément ferromagnétique (52) comporte au moins deux pièces (52A, 52B) de matériau ferromagnétique qui sont empilées tangentiellement dans l'espace interpolaire (47), la largeur active (Lf) de l'élément ferromagnétique (52) étant égale à la somme des largeurs actives (LfA+LfB) des pièces de matériau ferromagnétique (52A, 52B).

3. Machine électrique tournante selon l'une quelconque des revendications précédentes, **caractérisée en ce que** chaque roue polaire (34) comporte six griffes (40).

4. Machine électrique tournante selon l'une quelconque des revendications précédentes, **caractérisée en ce que** chaque roue polaire (12) comporte huit griffes (40).

5. Machine électrique tournante selon l'une quelconque des revendications précédentes, **caractérisée en ce que** le bobinage de stator (32) comporte au moins six enroulements de phase.

6. Machine électrique tournante selon l'une quelconque des revendications précédentes, **caractérisée en ce que** le stator (16) comporte trente-six encoches (28).

7. Machine électrique tournante selon la revendication 1, **caractérisée en ce que** le stator (16) comporte soixante-douze encoches (28).

8. Machine électrique tournante selon la revendication 4, **caractérisée en ce que** le stator (16) comporte quarante-huit encoches (28).


**Patentansprüche**

1. Drehende elektrische Maschine, die einen Rotor (12) und einen Stator (16) enthält;
wobei der Rotor (12) aufweist:

    - eine um eine axiale Drehachse (B) drehend montierte Welle (14);
    - ein vorderes Polrad (34) und ein hinteres Polrad (34), die den gleichen Außendurchmesser zwischen 90 und 120 mm haben, und die zentriert auf die Welle (14) montiert sind, wobei jedes Polrad (34) eine kreisförmige radiale Platte (36) aufweist;
    - Klauen (40), die sich ausgehend von einer am Umfang der Platte (36) jedes Polrads (34) angeordneten Basis (42) bis zu einem freien Ende (44) axial in Richtung des anderen Polrads (34) erstrecken, wobei jede Klaue (40) eines Polrads (34) tangential zwischen zwei benachbarte axiale Umfangsklauen (40) des anderen Polrads (34) eingefügt ist, wobei jede Klaue (40) tangential von zwei Seitenflächen (46) begrenzt wird, und jede Klaue (40) eine Trapezform hat, die von der Basis (42) zum freien Ende (44) konvergiert, und die Seitenflächen (46) jeder Klaue (40) den gleichen Klauenwinkel ($\alpha$) bezüglich der axialen Richtung (A) formen;
    - einen tangentialen Polzwischenraum (47), der zwischen den gegenüberliegenden parallelen Seitenflächen (46) von zwei aufeinanderfolgenden Klauen (40) jedes Polrads (34) ausgespart ist;
    - mindestens ein ferromagnetisches Element (52, 52A, 52B), das in mindestens einem Polzwischenraum (47) angeordnet ist und eine aktive Breite (Lf) aufweist, die orthogonal zu den Seitenflächen (46) der benachbarten Klauen (40) definiert ist; und

der Stator (16) einen ringförmigen Körper (18) koaxial zum Rotor (12) aufweist, der axiale Nuten (28) aufweist, die gleichmäßig entlang des ringförmigen Körpers (18) mit einer vorbestimmten Nutteilung (p) verteilt sind, und eine mehrphasige Statorwicklung (32) aufweist, die eine Vielzahl von Phasensträngen aufweist, welche in Reihen von zugeordneten Nuten (28) angeordnet sind;
**dadurch gekennzeichnet, dass** die Nutteilung (p) geringer als die Länge (La) der Seitenfläche (46) jeder Klaue (40) in axialer Projektion ist, um das Magnetrauschen zu minimieren, und die aktive Breite (Lf) des ferromagnetischen Elements zwischen 5 mm und 6 mm liegt.

2. Drehende elektrische Maschine nach dem vorhergehenden Anspruch, **dadurch gekennzeichnet, dass** das ferromagnetische Element (52) mindestens zwei Bauteile (52A, 52B) aus ferromagnetischem Material aufweist, die tangential im Polzwischenraum (47) gestapelt sind, wobei die aktive Breite (Lf) des ferromagnetischen Elements (52) gleich der Summe der aktiven Breiten (LfA+LfB) der Bauteile aus ferromagnetischem Material (52A, 52B) ist.

3. Drehende elektrische Maschine nach einem der vorhergehenden Ansprüche, **dadurch gekennzeichnet, dass** jedes Polrad (34) sechs Klauen (40) aufweist.

4. Drehende elektrische Maschine nach einem der vorhergehenden Ansprüche, **dadurch gekennzeichnet, dass** jedes Polrad (34) acht Klauen (40) aufweist.

5. Drehende elektrische Maschine nach einem der vorhergehenden Ansprüche, **dadurch gekennzeichnet, dass** die Statorwicklung (32) mindestens sechs Phasenstränge aufweist.

**6.** Drehende elektrische Maschine nach einem der vorhergehenden Ansprüche, **dadurch gekennzeichnet, dass** der Stator (16) sechsunddreißig Nuten (28) aufweist.

**7.** Drehende elektrische Maschine nach Anspruch 1, **dadurch gekennzeichnet, dass** der Stator (16) zweiundsiebzig Nuten (28) aufweist.

**8.** Drehende elektrische Maschine nach Anspruch 4, **dadurch gekennzeichnet, dass** der Stator (16) achtundvierzig Nuten (28) aufweist.

**Claims**

**1.** Rotary electric machine comprising a rotor (12) and a stator (16):

wherein said rotor (12) comprises:

- a shaft (14) mounted so as to be able to rotate about an axial axis of rotation (B);
- a forward pole wheel (34) and a rear pole wheel (34), the external diameters of which are the same and are between 90 and 120 mm, and which wheels are mounted centred on the shaft (14), wherein each pole wheel (34) comprises a circular radial plate (36);
- claws (40) extending in the axial direction toward the other pole wheel (34) from a base (42) arranged at the periphery of the plate (36) of each pole wheel (34) as far as a free end (44), wherein each claw (40) of a pole wheel (34) is tangentially interposed between two adjacent axial peripheral claws (40) of the other pole wheel (34), wherein each claw (40) is delimited tangentially by two lateral faces (46), and wherein each claw (40) has a trapezoidal shape which converges from the base (42) toward the free end (44), and wherein the lateral faces (46) of each claw (40) form one and the same claw angle ($\alpha$) with respect to the axial direction (A);
- a tangential interpolar space (47) which is established between the lateral faces (46) of two consecutive claws (40) of each pole wheel (34), wherein these faces are parallel and face each other;
- at least one ferromagnetic element (52, 52A, 52B) which is arranged in at least one interpolar space (47) and which has an active width (Lf) defined perpendicular to the lateral faces (46) of the adjacent claws (40);

and

wherein said stator (16) comprises an annular body (18), which is coaxial with the rotor (12) and comprises axial notches (28) regularly distributed along the annular body (18) with a predetermined tooth pitch (p), and comprises a multi-phase stator coil (32) comprising a plurality of phase windings which are arranged in series of associated notches (28);
**characterized in that** the tooth pitch (p) is smaller than the length (La) of the lateral face (46) of each claw (40) as seen in projection in the axial direction so as to minimize magnetic interference, and the active width (Lf) of the ferromagnetic element is between 5 mm and 6 mm.

**2.** Rotary electric machine according to the preceding claim, **characterized in that** the ferromagnetic element (52) comprises at least two parts (52A, 52B) made of ferromagnetic material which are stacked tangentially in the interpolar space (47), wherein the active width (Lf) of the ferromagnetic element (52) is equal to the sum of the active widths (LfA+LfB) of the parts made of ferromagnetic material (52A, 52B).

**3.** Rotary electric machine according to either of the preceding claims, **characterized in that** each pole wheel (34) comprises six claws (40).

**4.** Rotary electric machine according to any one of the preceding claims, **characterized in that** each pole wheel (34) comprises eight claws (40).

**5.** Rotary electric machine according to any one of the preceding claims, **characterized in that** the stator coil (32) comprises at least six phase windings.

**6.** Rotary electric machine according to any one of the preceding claims, **characterized in that** the stator (16) comprises thirty-six notches (28).

**7.** Rotary electric machine according to Claim 1, **characterized in that** the stator (16) comprises seventy-two notches (28).

**8.** Rotary electric machine according to Claim 4, **characterized in that** the stator (16) comprises forty-eight notches (28).

**Fig. 1**

**Fig. 2**

**Fig. 3**

**Fig. 4**

**Fig. 5**

**Fig. 6**

53 56 46 46 56 53

40

40

Lf

R
T
A

**Fig. 7**

I

4 5 6 10

Lf(mm)

**Fig. 8**

34

40 46

La

P

18

16 28 30

**Fig. 9**

LfB LfA

58

40 40

52B 52A

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2865322
- US 4201930 A
- EP 0881752 A
- FR 2725445 A
- US 6002219 A
- US 20020175589 A1
- EP 0454039 A
- FR 2784248 A
- FR 2737063 A
- EP 0454039 A1